(19) **Europäisches Patentamt**

**European Patent Office**

**Office européen des brevets**

(11) **EP 0 925 852 B1**

(12) **EUROPEAN PATENT SPECIFICATION**

(45) Date of publication and mention
of the grant of the patent:
**12.06.2002 Bulletin 2002/24**

(51) Int Cl.⁷: **B21B 15/00**, B23K 11/00

(21) Application number: **98124446.0**

(22) Date of filing: **22.12.1998**

(54) **Method and facilities for continuously rolling billet**

Verfahren und Anlage zum kontinuerlichen Walzen von Knüppeln

Procédé et installation pour laminer en continu des billets

(84) Designated Contracting States:
**AT BE DE FI FR GB IT SE**

(30) Priority: **25.12.1997 JP 35681297**
**25.12.1997 JP 35681397**

(43) Date of publication of application:
**30.06.1999 Bulletin 1999/26**

(73) Proprietor: **NKK CORPORATION**
**Tokyo (JP)**

(72) Inventors:
• **Matsuo, Giichi**
**Kawasaki-ku, Kawasaki-shi 210-0855 (JP)**

• **Wakasa, Hiroshi**
**Kawasaki-ku, Kawasaki-shi 210-0855 (JP)**

(74) Representative: **HOFFMANN - EITLE**
**Patent- und Rechtsanwälte**
**Arabellastrasse 4**
**81925 München (DE)**

(56) References cited:
**EP-A- 0 761 328**      **DE-A- 2 836 338**
**GB-A- 766 425**

• **PATENT ABSTRACTS OF JAPAN vol. 010, no. 365 (M-542), 6 December 1986 & JP 61 159285 A (KAWASAKI STEEL CORP), 18 July 1986**

**Description**

BACKGROUND OF THE INVENTION

1. Field of the Invention

The present invention relates to a method and facilities for continuously rolling billet in which successively supplied billets are welded by a flash butt welder and the welded billets are continuously rolled in a rolling mill line, in particular, to make it possible to rectify the end portions of billet before flash butt welding.

2. Description of Related Art

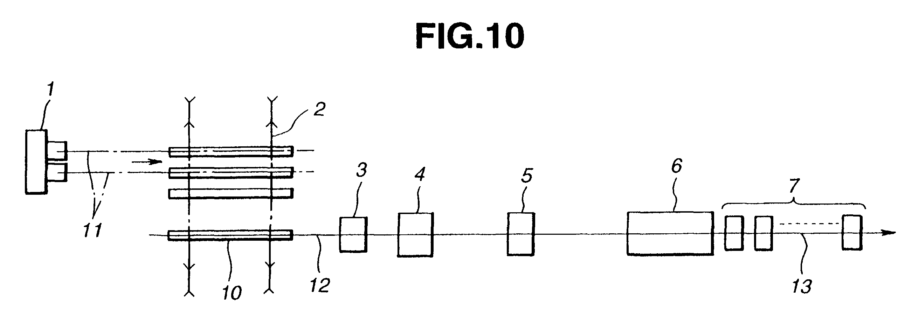

Fig. 10 is a schematic diagram showing an example of conventional facilities for continuously rolling billet. A casting line 11 and a rolling line 13 are located parallel to each other. Billets 10 continuously cast by a continuous casting machine 1 with 2 strands are successively transported to a billet joining line 12 placed on the upstream side of the rolling line 13 by way of a chain conveyor 2. After the passage through a descaler 3, the billets 10 are welded by a traveling flash butt welder 4. The welded billets are then burr-removed by a burr remover 5 and continuously rolled in a rolling mill line 7 consisting of a number of rolling mill stands. The welded billets are reheated by an induction heater 6 when the billet temperature is low, as in the case in which the billets 10 are directly transported from the continuous casting machine 1.

The descaler 3 removes the scales on the portions of the billet 10 which are in contact with the power supply clamps of the traveling flash butt welder 4, using for example high-pressure water jet or rotary brush. The traveling flash butt welder 4 produces no inclusion in the welded part regardless of the scales or the surface roughness of the billet 10. However, it causes the following problems when the billets 10 sheared after continuous casting are welded.

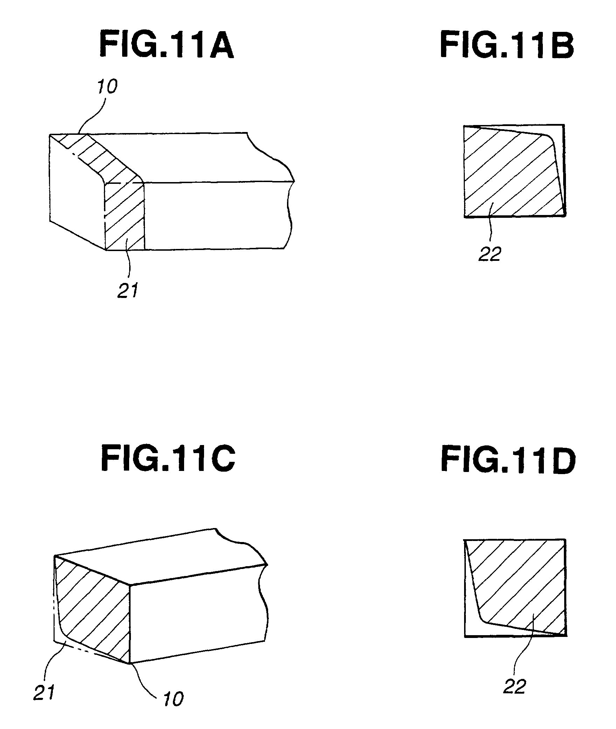

Figs. 11A and 11B illustrate a perspective view and a cross section configuration of front end portion of billet respectively. Fig. 11C and 11D illustrate a perspective view and a cross section configuration of rear end portion of billet respectively. A crushed portion 21 is generated in either of the front and rear end portions of a billet 10 sheared after continuous casting, and the cross section configuration 22 of these portions is also distorted.

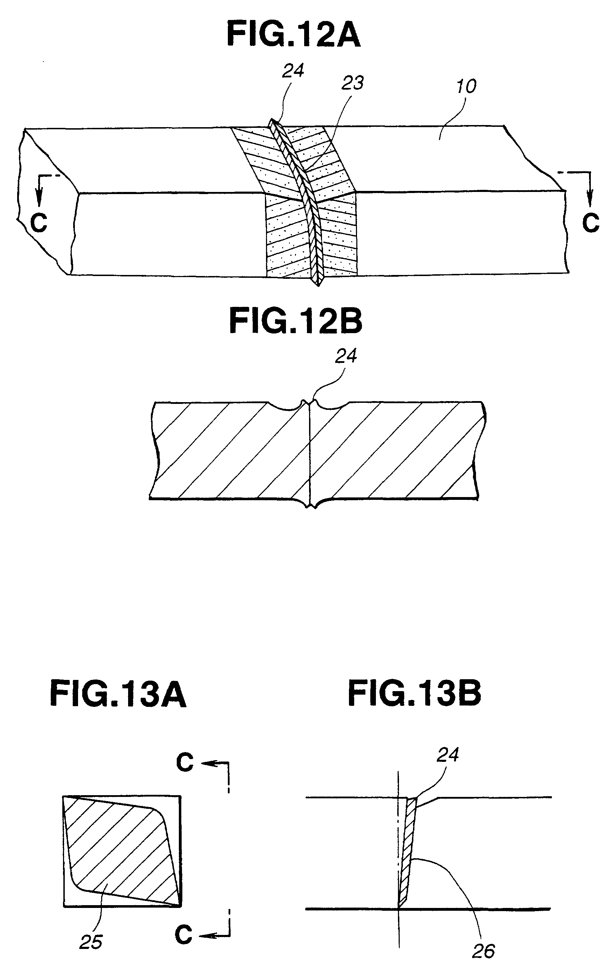

Fig. 12A illustrates a perspective view of welded part when billets are welded with crushed portions being well matched. Fig. 12B is a sectional view taken along the line C-C of Fig. 12A. Welding of billets 10 with crushed portions being well matched generates an indented portion 23 and a burr 24 protruding therein. Thus, it is difficult to remove it afterward.

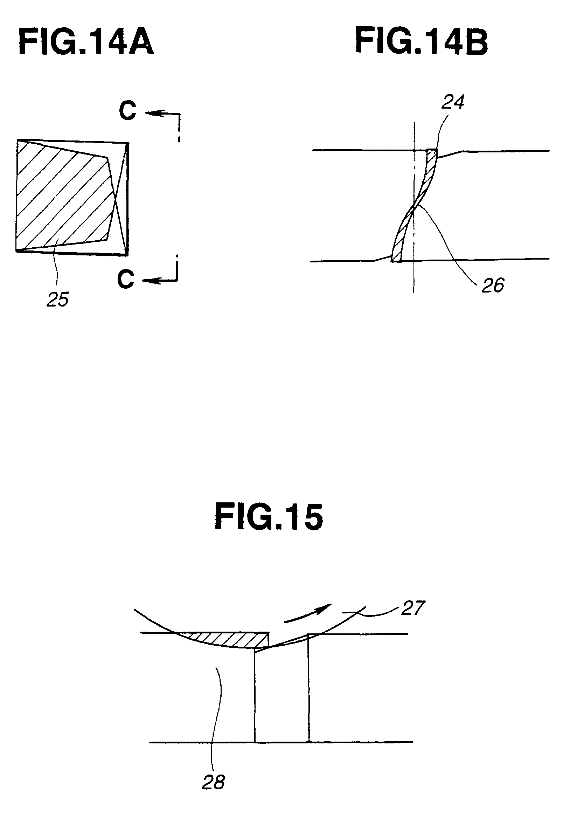

Figs. 13A and 14A shows examples of cross section configuration of welded part when billets are welded without crushed portions being well matched. Figs. 13B and 14B are sectional views taken along the line C-C of Figs. 13A and 14A respectively. When billets are welded without crushed portions being well matched, a welded part 25 is in an overhung state, resulting in a joint line 26 being inclined (Fig. 13B) or being crossed (Fig. 14B). Therefore, a burr 24 is generated in the inner side of the step, which makes it very difficult to remove it.

A grinder type machine or a mechanical type machine is adopted as a burr remover 5 of Fig. 10. The mechanical type machine cannot remove a burr in all the cases of Figs. 12B, 13B, and 14B because the burr is below the billet surface. On the other hand, the grinder type machine can remove a burr when, as shown in Fig. 15, a base material 28 is ground with a small-diameter grinder 27. However, it causes an increase in burr removing power, and a long operation time contrary to the requirement for reduction in time cycle.

EP 0 761 328 A discloses a conventional continuous rolling method, according to the pre-characterising part of claim 1. The billets are cast in a continuous casting machine and then directly supplied to the joining line. The scale on the billets is removed by a descaling apparatus. Further, the apparatus comprises a travelling flash butt welder to produce a continuous billet and grinders for removing the burr on the welded part. Finally, the billet is continuously rolled in a rolling mill line after being heated in an induction heater. Furthermore, document DE 28 36 338 discloses an apparatus according to the pre-characterising part of claim 4.

As described above, in the conventional facilities for continuously rolling billet, since sheared cross sections of billets are welded without being rectified, the removal of burr cannot be conducted to a satisfactory degree after welding. As a result, surface defects are generated in a rolling line, so that products obtained do not have a good quality, making it necessary to remove the surface defects after rolling or to remove a burr completely for many hours.

SUMMARY OF THE INVENTION

It is accordingly an object of the present invention to provide a method and facilities for continuously rolling billet in which the removal of burr can be easily and completely conducted after flash butt welding.

According to the present invention, there is provided a method for continuously rolling billet, as defined in claim 1.

Both the vertical and horizontal surfaces of billet preferably should be lightly rolled so as to obtain a configuration of the end portions of billet more suitable for flash butt welding.

The method above mentioned for continuously rolling billet can be realized by facilities as defined in claim 4.

As an apparatus for lightly rolling the end portions of billet, the use of rolling mills equipped with a pair of rolls each having a concave section of a certain size allows the easier rectification of the end portions of billet because the size of the concave section can be selected in accordance with the cross section configuration of billet.

BRIEF DESCRIPTION OF THE DRAWINGS

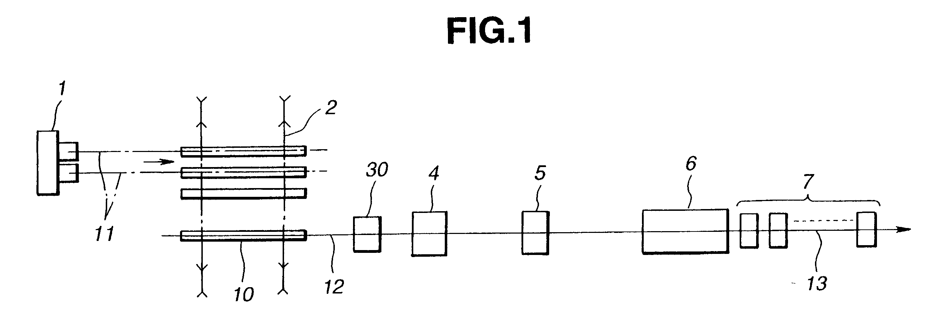

Fig. 1 is a schematic diagram showing an example of facilities for continuously rolling billet according to the present invention.

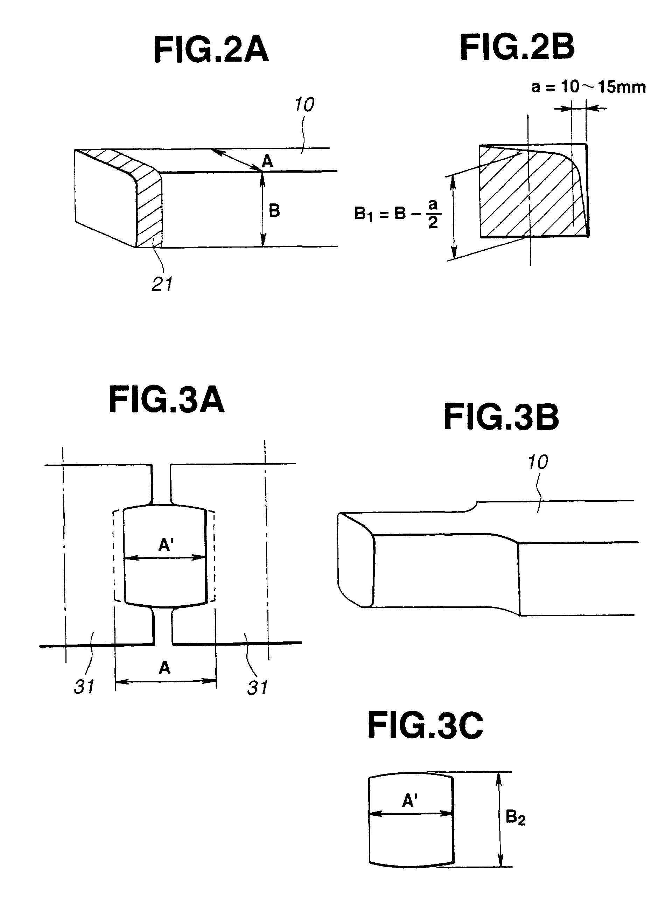

Fig. 2A illustrates a perspective view of the end portion of billet before light rolling.

Fig. 2B illustrates a cross section configuration of the end portion of billet before light rolling.

Fig. 3A illustrates a light rolling method by a vertical rolling mill.

Fig. 3B illustrates a perspective view of the end portion of billet after light rolling by the vertical rolling mill.

Fig. 3C illustrates a cross section configuration of the end portion of billet after light rolling by the vertical rolling mill.

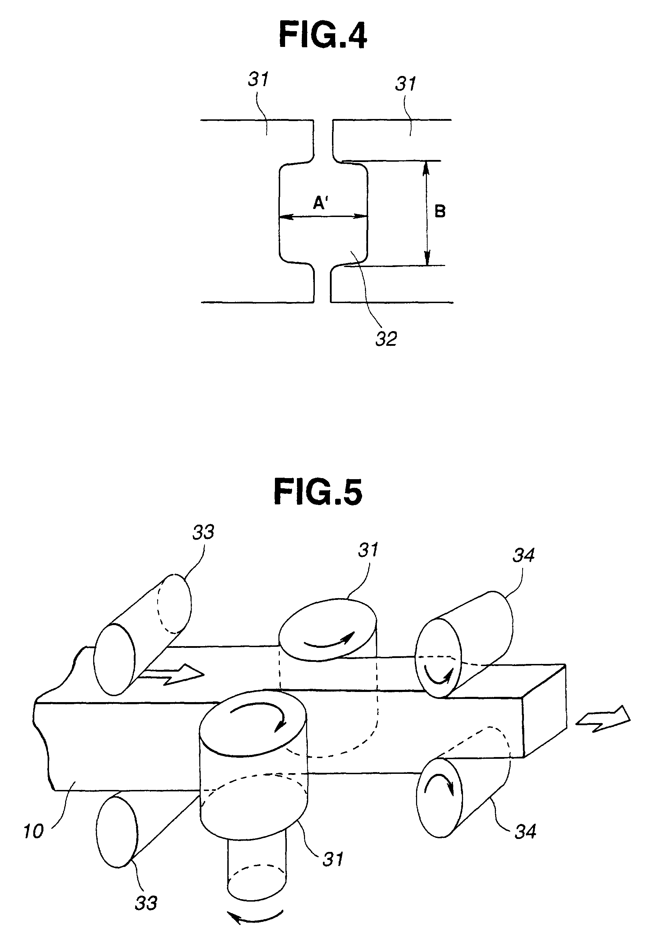

Fig. 4 illustrates the condition of the vertical rolling mill.

Fig. 5 is a schematic diagram showing an example of an apparatus for lightly rolling end portions of billet according to the present invention.

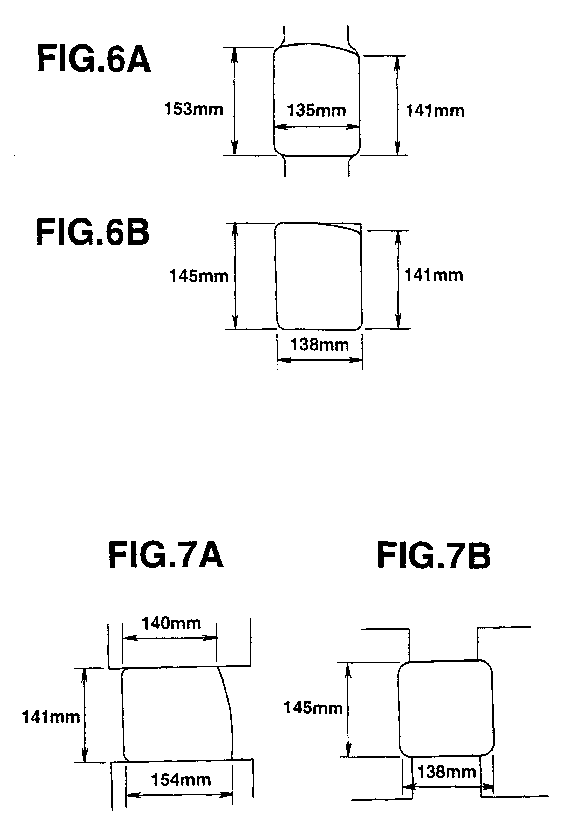

Fig. 6A illustrates a cross section configuration of front end portion of billet after light rolling with the rolls 31.

Fig. 6B illustrates a cross section configuration of the front end portion of billet after light rolling with the rolls 34.

Fig. 7A illustrates a cross section configuration of the rear end portion of billet after light rolling with the rolls 33.

Fig. 7B illustrates a cross section configuration of the rear end portion of billet after light rolling with the rolls 31.

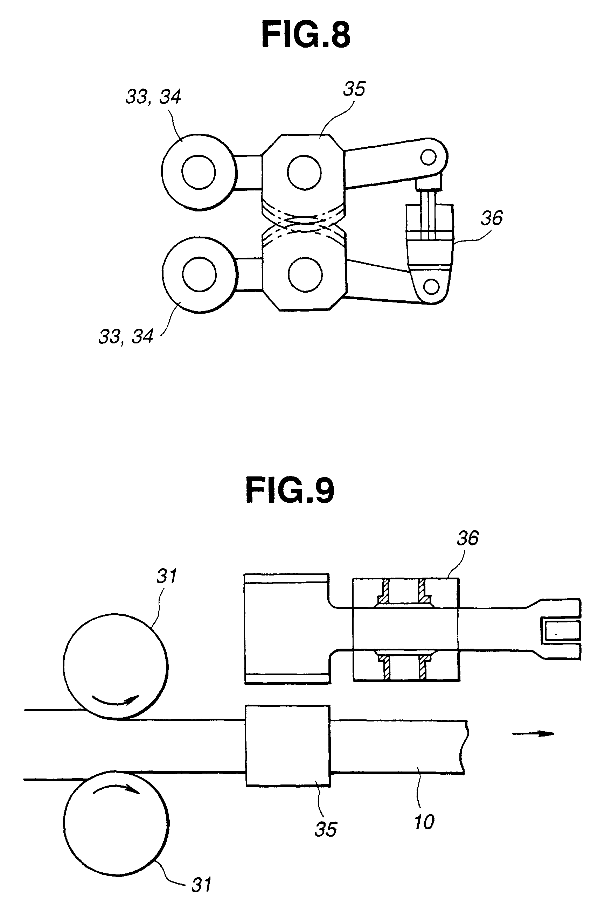

Fig. 8 is a side view of a support mechanism for drive-free rolls.

Fig. 9 is a top view of the support mechanism shown in Fig. 8.

Fig. 10 is a schematic diagram showing an example of conventional facilities for continuously rolling billet.

Fig. 11A illustrates a perspective view of front end portion of billet.

Fig. 11B illustrates a cross section configuration of the front end portion of billet.

Fig. 11C illustrates a perspective view of rear end portion of billet.

Fig. 11D illustrates a cross section configuration of the rear end portion of billet.

Fig. 12A illustrates a perspective view of welded part when billets are welded with crushed portions being well matched.

Fig. 12B is a sectional view taken along the line C-C of Fig. 12A.

Fig. 13A shows an example of cross section configuration of welded part when billets are welded without crushed portions being well matched.

Fig. 13B is a sectional view taken along the line C-C of Fig. 13A.

Fig. 14A shows another example of cross section configuration of welded part when welding of billets is performed without crushed portions being well matched.

Fig. 14B is a sectional view taken along the line C-C of Fig. 14A.

Fig. 15 illustrates a burr removal method by a grinder type machine.

DETAILED DESCRIPTION OF THE INVENTION

Fig. 1 is a schematic diagram showing an example of facilities for continuously rolling billet according to the present invention. A rolling mill 30 is used as an apparatus for lightly rolling the end portions of the billets 10 and removing the scales thereon, replacing the descaler 3 of the conventional facilities shown in Fig. 10. The end portions of the billets 10 are rectified by light rolling with the rolling mill 30 into a substantially equivalent configuration free from crushing which is suitable for flash butt welding. As a result, it is possible to perform welding under the condition that the welded sections are well matched and therefore to remove a burr easily and completely. At the same time, the light rolling allows the mechanical descaling of the portions of the billets 10 on which the power supply clamps of the traveling flash butt welder 4 are set. It is, therefore, not necessary to provide a descaler in the present invention.

When the traveling flash butt welder 4 is of the type in which clamping is horizontally effected, a vertical rolling mill is adopted as the rolling mill 30, and when the traveling flash butt welder 4 is of the type in which clamping is vertically effected, a horizontal rolling mill is accordingly used, which makes it possible to more completely remove the scales on the end potions of the billets.

It is enough that the light rolling is performed in the regions 30 to 100cm from the front and rear ends of billet respectively, but it is practically easy to lightly roll the entire length of billet.

When the billet temperature is low or when the billets are directly transported from continuous casting machine, a billet heater may be arranged on the upstream side of the rolling mill 30.

Fig. 2A illustrates a perspective view of end portion of billet before light rolling, and Fig. 2B illustrates a cross section configuration of the end portion of billet before light rolling.

Fig. 3A illustrates a light rolling method by a vertical rolling mill. Fig. 3B illustrates a perspective view of end portion of billet after light rolling by the vertical rolling mill, and Fig. 3C illustrates a cross section configuration of the end portion of billet after light rolling by the vertical rolling mill.

The light rolling method by the vertical rolling mill with vertical rolls 31 each having a concave section will now be considered. In the case of a flat roll, the height B' of the billet 10 achieved by light rolling is as follows:

$$B' = \alpha(A - A') + B$$

where $\alpha$ is a ratio of the billet width after light rolling to before light rolling($0.4 \sim 0.5$), A and A' are the billet width before and after light rolling respectively, and B is the billet height before light rolling.

Therefore, the height B2 of the crushed portion 21 after light rolling is as follows:

$$B2 = \alpha (A - A') + B1 = B + \alpha (A - A') - a/2$$

where B1(=B-a/2) is the height of the crushed portion 21 before light rolling.

Thus, assuming that $\alpha (A - A') = a/2$,

$$B2 = B$$

As shown in Fig. 4, the vertical dimension of the concave section 32 of the vertical rolls 31 is set to B, and light rolling is conducted such that the roll gap becomes A', whereby the cross section configurations of the front and rear end portions of the billet 10 are substantially symmetrical and the same independently of the location of the crushed portion 21, making it possible to perfectly weld the end cross sections at flash butt welding. Further, since a burr is always formed above the billet surface, the burr removal is facilitated and the descaling on the clamp portions of the billet 10(the contact portions of the power supply clamps of flash butt welder) can be simultaneously effected.

Fig. 5 is a schematic diagram showing an example of an apparatus for lightly rolling end portions of billet according to the present invention. This apparatus is composed of a vertical rolling mill with the rolls 31 and two pairs of horizontal drive-free rolls 33 and 34 disposed on the entry and delivery sides of the vertical rolling mill respectively. These drive-free rolls 33 and 34 can put some rolling load on the billet 10 owing to the propulsive force of the vertical rolling mill, though the drive-free rolls are defined as rolls which are not electrically driven. In this case, a flash butt welder clamps the billet 10 horizontally since the vertical rolling mill is adopted as a rolling mill.

To lightly rolling the front end portion of the billet 10, the rolls 31 of the vertical rolling mill and the delivery side drive-free rolls 34 are used, and the roll gap of the rolls 31 is set close to the maximum amount of deformation at shearing (e.g., 15 mm for 150 mm square). Since the spreading ratio after light rolling to before light rolling is normally 40 %, the end cross section measures 135 × 153 mm after the light rolling with the rolls 31, as shown in Fig. 6A. When the roll gap of the delivery side drive-free rolls 34 is set to 145 mm, the end cross section is finally rectified as shown in Fig. 6B, in which three sides of the cross section are completely rectified independently of the crushing at shearing, and the amount of depression of the forth side can be limited to less than 5 mm. Even if a depression of this degree remains, since a bulging phenomenon occurs at upsetting of flash butt welding, a burr is formed above the billet surface, and can thereby be removed. Moreover, the welded part does not remain as a defect. At the same time, the scales of the front end portions of the billet 10 being contacted with the power supply clamps of flash butt welder are removed by the light rolling with the rolls 31 and 34.

To lightly rolling the rear end portion of the billet 10, the entry side drive-free rolls 33 and the rolls 31 of the vertical rolling mill are used. First, light rolling is performed by the entry side drive-free rolls 33, and then, light rolling is performed by the rolls 31. Fig. 7A illustrates a cross section configuration of the rear end portion of the billet 10 after light rolling with the drive-free rolls 33, and Fig. 7B illustrates a cross section configuration the rear end portion of the billet 10 after light rolling with the rolls 31. The cross section configuration of the rear end portion of the billet 10 is, as is shown, rectified with few depressions. At the same time, the scales of the rear end portions of the billet 10 being contacted with the power supply clamps, are removed by the rolling with the rolls 33 and 31.

In order for the entry side drive-free rolls 33 or the delivery side drive-free rolls 34 to operate, the rolling by the vertical rolling mill is needed. When the billet 10 is taken out of the vertical rolling mill, it cannot be rolled by the drive-free rolls 34 because of lack of driving force. Therefore, the rear end portion of the billet 10 must be lightly rolled by using the entry side drive-free rolls 33.

When the drive-free rolls 33 and 34 do not operate, they are retreated by a support mechanism that will be described below.

Figs. 8 and 9 are side and top views of a support mechanism for the drive-free rolls. It is preferable for these drive-free rolls 33 and 34 to operate in a vertically (or horizontally) symmetrical manner. For this reason, a support mechanism having an equalizer 35 and a hydraulic cylinder 36 is adopted, as is shown. In these figures, the support mechanism is shown as a cantilevered-type, it may be fixed at both ends. In any case, it is recommended to place a fulcrum and the hydraulic cylinder 36 outside a pass line. Since the drive-free rolls are loaded or unloaded on a billet during light rolling, they are controlled by the hydraulic cylinder 36.

## Claims

1. A method for continuously rolling billet, comprising the steps of:

   welding the rear end of a preceding billet with the front end of a succeeding billet by a flash butt welder;
   removing a burr in the welded part; and
   rolling the welded billets;

   **characterized by** the step of lightly rolling the end portions of billets successively transported into substantially equivalent configurations free from crushing, before welding the rear end of a preceding billet with the front end of a succeeding billet by said flash butt welder.

2. The method according to claim 1, **characterized in that** the light rolling is conducted on both the vertical and horizontal surfaces of billet.

3. The method according to claim 1 or 2, **characterized in that** the light rolling is performed in the regions 30 to 100 cm from the front and rear ends of billet, respectively.

4. Facilities for continuously rolling billet (10), comprising:

   an apparatus (30) for lightly rolling the end portions of billet;
   a travelling flash butt welder (4) for welding the rear end portion of preceding billet with the front end portion of succeeding billet;
   a burr remover (5) for removing a burr in the welded part; and
   a rolling mill line (13) for continuously rolling the welded billets;

   **characterized in that**
   the apparatus for lightly rolling the end portions of billet comprises a rolling mill (30) equipped with a pair of rolls (31) each having a concave section (32).

5. The facilities according to claim 4, wherein the rolling mill (31) is a vertical rolling mill when the clamp surface of the travelling flash butt welded (4) coincides with the vertical surface of billet and a horizontal rolling mill when the clamp surface coincides with the horizontal surface of billet.

6. The facilities according to claim 4 or 5, **character-**

**ized in that** the apparatus for lightly rolling the end portions of billet consists of a rolling mill (31), and two pairs of drive-free rolls (33, 34) which are respectively disposed on the entry and delivery sides of the rolling mill and perpendicular to the rolls of the rolling mill.

## Patentansprüche

1. Verfahren zum kontinuierlichen Walzen von Brammen, umfassend die Schritte:

   Verschweißen des rückwärtigen Endes einer vorhergehenden Bramme mit dem vorderen Ende einer nachfolgenden Bramme durch ein Abbrennschweißgerät;

   Entfernen eines Grats in dem verschweißten Teil; und

   Walzen der verschweißten Brammen;

   **gekennzeichnet durch** den Schritt des Leichtwalzens der Endbereiche der Brammen, die nacheinanderfolgend transportiert werden, in im wesentlichen äquivalente Konfigurationen, die frei von Eindrücken sind, vor dem Verschweißen des rückwärtigen Endes einer vorhergehenden Bramme mit dem vorderen Ende einer nachfolgenden Bramme **durch** das Abbrennschweißgerät.

2. Verfahren nach Anspruch 1, **dadurch gekennzeichnet, dass** das Leichtwalzen auf sowohl der vertikalen als auch der horizontalen Oberfläche der Bramme durchgeführt wird.

3. Verfahren nach Anspruch 1 oder 2, **dadurch gekennzeichnet, dass** das Leichtwalzen in den Gebieten 30 bis 100 cm vom vorderen und hinteren Ende der Bramme jeweils durchgeführt wird.

4. Einrichtung zum kontinuierlichen Walzen von Brammen (10), umfassend:

   eine Vorrichtung (30) zum Leichtwalzen der Endbereiche der Bramme;

   ein fahrendes Schweißgerät (4) zum Verschweißen des hinteren Endbereichs der vorhergehenden Bramme mit dem vorderen Endbereich der nachfolgenden Bramme;

   einen Entgrater (5) zum Entfernen eines Grats in dem verschweißten Teil; und

   eine Walzwerklinie (13) zum kontinuierlichen Walzen der verschweißten Brammen;

**dadurch gekennzeichnet, dass**
die Vorrichtung zum Leichtwalzen der Endbereiche der Bramme ein Walzwerk (30) umfasst, das mit einem Paar von Walzen (31) ausgestattet ist, die jeweils einen konkaven Abschnitt (32) aufweisen.

5. Einrichtung nach Anspruch 4, wobei das Walzwerk (31) ein vertikales Walzwerk ist, wenn die Klemmenoberfläche des fahrenden Abbrennschweißgeräts (4) mit der vertikalen Oberfläche der Bramme zusammenfällt, und ein horizontales Walzwerk ist, wenn die Klemmenoberfläche mit der horizontalen Oberfläche der Bramme zusammenfällt.

6. Einrichtung nach Anspruch 4 oder 5, **dadurch gekennzeichnet, dass** die Vorrichtung zum Leichtwalzen der Endbereiche der Bramme aus einem Walzwerk (31) besteht und zwei Paaren von antriebsfreien Walzen (33, 34), die jeweils auf der Eingangs- und Ausgangsseite des Walzwerks und senkrecht zu den Walzen des Walzwerks angeordnet sind.

**Revendications**

1. Procédé pour laminer des billettes en continu, comprenant les étapes consistant à :

   souder l'extrémité arrière d'une billette précédente à l'extrémité avant d'une billette suivante par un dispositif de soudage en bout par étincelage ;
   éliminer une bavure dans la partie soudée ; et laminer les billettes soudées ;

   **caractérisé par** l'étape consistant à laminer légèrement les parties d'extrémité des billettes successivement transportées selon des configurations sensiblement équivalentes sans écrasement, avant le soudage de la partie arrière d'une billette précédente à la partie avant d'une billette suivante par ledit dispositif de soudage en bout par étincelage.

2. Procédé selon la revendication 1, **caractérisé en ce que** le laminage léger est effectué à la fois sur les surfaces verticales et horizontales de la billette.

3. Procédé selon la revendication 1 ou 2, **caractérisé en ce que** le laminage léger est effectué dans les régions situées respectivement entre 30 et 100 cm des extrémités avant et arrière de la billette.

4. Installation pour laminer des billettes en continu (10), comprenant :

   un dispositif (30) pour laminer légèrement les parties d'extrémité de la billette ;

un dispositif mobile de soudage en bout par étincelage (4) pour souder la partie d'extrémité arrière d'une billette précédente à la partie d'extrémité avant d'une billette suivante ;
un dispositif d'élimination de bavure (5) pour éliminer une bavure dans la partie soudée ; et une ligne de laminage (13) pour laminer en continu les billettes soudées ;

   **caractérisé en ce que**
   le dispositif pour laminer légèrement les parties d'extrémité de la billette comprend un laminoir (30) équipé d'une paire de rouleaux (31) ayant chacun une section concave (32).

5. Installation selon la revendication 4, dans laquelle le laminoir (31) est un laminoir vertical lorsque la surface de serrage du dispositif de soudage en bout par étincelage (4) coïncide avec la surface verticale de la billette et un laminoir horizontal lorsque la surface de serrage coïncide avec la surface horizontale de la billette.

6. Installation selon la revendication 4 ou 5, **caractérisée en ce que** le dispositif pour laminer légèrement les parties d'extrémité de la billette est constitué d'un laminoir (31) et de deux paires de rouleaux d'entraînement libres (33, 34), qui sont respectivement disposés sur les coté d'entrée et de fourniture du laminoir et perpendiculaires aux rouleaux du laminoir.

# FIG.1

EP 0 925 852 B1

# FIG.2A

# FIG.2B

$$a = 10 \sim 15mm$$

$$B_1 = B - \frac{a}{2}$$

# FIG.3A

# FIG.3B

# FIG.3C

# FIG.4

# FIG.5

**FIG.6A**

153mm · 135mm · 141mm

**FIG.6B**

145mm · 141mm · 138mm

**FIG.7A**

140mm · 141mm · 154mm

**FIG.7B**

145mm · 138mm

# FIG.8

33, 34

35

36

33, 34

# FIG.9

36

31

35

10

31

# FIG.10

## FIG.11A

## FIG.11B

## FIG.11C

## FIG.11D

# FIG.12A

*24* *23* *10*

C C

# FIG.12B

*24*

# FIG.13A

C

C

*25*

# FIG.13B

*24*

*26*

# FIG.14A

**C**

25

# FIG.14B

24

26

# FIG.15

27

28